# EUROPÄISCHE PATENTSCHRIFT

(11) **EP 3 378 721 B1**
(45) Veröffentlichungstag und Bekanntmachung des Hinweises auf die Patenterteilung: **05.06.2019**
(21) Anmeldenummer: 18162923.9
(22) Anmeldetag: 20.03.2018
(51) Int. Cl.: B60W 50/08, B60W 30/182, B60W 50/00

(54) **FAHRZEUG, INSBESONDERE NUTZFAHRZEUG, UND VERFAHREN ZUM BETREIBEN DES FAHRZEUGS**
VEHICLE, IN PARTICULAR COMMERCIAL VEHICLE, AND METHOD FOR OPERATING THE VEHICLE
VÉHICULE, EN PARTICULIER VÉHICULE UTILITAIRE ET PROCÉDÉ DE FONCTIONNEMENT DU VÉHICULE

(30) Priorität: 25.03.2017 DE 102017002888
(43) Veröffentlichungstag der Anmeldung: 26.09.2018
(73) Patentinhaber: MAN Truck & Bus AG, 80995 München (DE)
(72) Erfinder: HUDELMAIER, Wolfgang, 82110 Germering (DE); HORN, Christian, 82211 Herrsching (DE); MIKSCH, Rainer, 85256 Vierkirchen (DE); ZOTH, Daniel, 81543 München (DE); HÖNLE, Jochen, 86559 Adelzhausen (DE)
(74) Vertreter: v. Bezold & Partner Patentanwälte - PartG mbB

(56) Entgegenhaltungen:
- EP-A1- 3 045 368
- DE-A1-102011 005 000
- GB-A- 2 523 177
- US-A1- 2002 123 836
- US-A1- 2011 106 388

## Beschreibung

Die Erfindung betrifft ein Fahrzeug, insbesondere ein Nutzfahrzeug, nach dem Oberbegriff des Patentanspruchs 1 sowie ein Verfahren zum Betreiben eines Fahrzeugs, insbesondere eines Nutzfahrzeugs, nach dem Oberbegriff des Patentanspruchs 11.

Es ist bekannt, die Schaltvorgänge eines automatisierten Fahrzeuggetriebes in Abhängigkeit von dem Steigungsverlauf einer Fahrbahn des Fahrzeugs zu steuern. Beispielsweise ist aus der DE 10 2004 040 351 A1 eine Vorrichtung zur Getriebesteuerung für ein Fahrzeug bekannt, bei dem eine Auswerte- und Steuereinheit vorgesehen ist, welche aus gespeicherten Klassifizierungsparametern, Motorleistungsdaten, Fahrerleistungsdaten und Motorkennfelddaten des Fahrzeugs ein Geschwindigkeitssollwert für die Befahrung eines vorausliegenden klassifizierten Streckenabschnitts ermittelt wird. Anhand der Klassifizierungsparameter und der ermittelten Sollgeschwindigkeit wird dann eine Schaltfolge für das Fahrzeuggetriebe ermittelt. Konkret wird der vorausliegende Streckenabschnitt hier bezüglich seines Steigungsverlaufs mittels der Klassifizierungsparameter klassifiziert.

Ein Fahrzeug ist aus dem gattungsbildenden Dokument EP 3 045 368 bekannt.

Des Weiteren ist es auch bekannt, bei einem Fahrzeug mehrere von einem Fahrer auswählbare Fahrprogramme vorzusehen, mittels denen der Fahrzeugbetrieb bezüglich wenigstens eines Parameters optimiert werden kann. Ein derartiges Fahrprogramm kann beispielsweise durch ein ECO-Fahrprogramm bzw. Energiespar-Fahrprogram gebildet sein, mittels dem der Kraftstoffverbrauch des Fahrzeugs verringert werden soll. Zur Verringerung des Kraftstoffverbrauchs ist es dabei beispielsweise bekannt, das Drehzahlniveau einer Brennkraftmaschine als Antriebsmotor des Fahrzeugs abzusenken bzw. möglichst gering zu halten. Dies kann insbesondere dadurch realisiert werden, dass das Schaltverhalten eines automatisierten Schaltgetriebes des Fahrzeugs derart geändert wird, dass das Schaltgetriebe früher hochschaltet bzw. dass immer ein möglichst hoher Gang des Schaltgetriebes eingelegt ist. Die Steuerung eines automatisierten Schaltgetriebes dergestalt, dass die Brennkraftmaschine stets auf einem möglichst geringem Drehzahlniveau betrieben wird, hat jedoch den Nachteil, dass sich für einen Fahrer des Fahrzeugs die Fahrbarkeit des Fahrzeugs bzw. der Fahrkomfort subjektiv verringert. Der Betrieb der Brennkraftmaschine auf einem sehr niedrigen Drehzahlniveau führt nämlich, insbesondere im Volllastbetrieb der Brennkraftmaschine, regelmäßig zu spürbaren Vibrationen und Schwingungen im Fahrzeug. Dadurch leidet die Akzeptanz eines diese Schaltstrategie verwendenden ECO-Fahrprogramms, so dass häufig Schaltkorrekturen durch den Fahrer (Kickdown oder manueller Eingriff) vorgenommen oder auf die Verwendung dieses Fahrprogramms verzichtet wird.

Aufgabe der Erfindung ist es daher, ein Fahrzeug, insbesondere ein Nutzfahrzeug, sowie ein Verfahren zum Betreiben eines Fahrzeugs, insbesondere eines Nutzfahrzeugs, bereitzustellen, mittels denen der Kraftstoffverbrauch des Fahrzeugs unter Bereitstellung eines hohen Fahrkomforts effektiv reduziert werden kann.

Diese Aufgabe wird gelöst mit den Merkmalen der unabhängigen Patentansprüche. Bevorzugte Weiterbildungen sind in den Unteransprüchen offenbart.

Gemäß Patentanspruch 1 wird ein Fahrzeug, insbesondere ein Nutzfahrzeug, vorgeschlagen, mit einer, eine Brennkraftmaschine aufweisenden Antriebseinrichtung zum Antreiben des Fahrzeugs, mit einer Steigung-Ermittlungseinrichtung, mittels der die Fahrbahnsteigung an einem aktuellen und/oder voraussichtlich zukünftig mit dem Fahrzeug befahrenden Fahrbahnabschnitt ermittelt werden kann, und mit einer Steuereinrichtung, mittels der die Brennkraftmaschine derart gesteuert werden kann, dass das maximale Antriebsmoment der Brennkraftmaschine auf einen definierten Drehmoment-Maximalwert begrenzt ist. Erfindungsgemäß weist die Steuereinrichtung eine datenübertragend bzw. signalübertragend mit der Steigung-Ermittlungseinrichtung verbundene Stelleinrichtung auf, mittels der, insbesondere zur Reduzierung des Kraftstoffverbrauchs des Fahrzeugs, der definierte Drehmoment-Maximalwert in Abhängigkeit von der ermittelten Fahrbahnsteigung an dem aktuell und/oder zukünftig mit dem Fahrzeug befahrenden Fahrbahnabschnitt als Einstellparameter selbsttätig bzw. automatisch eingestellt werden kann.

Auf diese Weise wird der Kraftstoffverbrauch des Fahrzeugs unter Bereitstellung eines hohen Fahrkomforts reduziert, da nun zur Reduzierung des Kraftstoffverbrauchs nicht das Drehzahlniveau der Brennkraftmaschine möglichst weit abgesenkt wird, sondern das maximale Antriebsmoment der Brennkraftmaschine in Abhängigkeit von der ermittelten Fahrbahnsteigung definiert eingestellt bzw. adaptiert wird. Das maximale Antriebsmoment der Brennkraftmaschine kann dabei beispielsweise bei einem geringerem Anstieg der Fahrbahn auf einen geringeren Drehmoment-Maximalwert begrenzt werden, so dass die Brennkraftmaschine dann nur in einem besonders energieeffizienten bzw. verbrauchsoptimalen Bereich betrieben werden kann. Bei einem größeren Anstieg der Fahrbahn kann dann ein größerer Drehmoment-Maximalwert eingestellt werden, so dass der steilere Anstieg ohne Zurückschalten bewältigt werden kann. Dabei wird weiterhin ein hoher Fahrkomfort für den Fahrer des Fahrzeugs sichergestellt.

Die Stelleinrichtung ist dabei vorzugsweise durch eine an einem Steuergerät zur Steuerung des Brennkraftmaschinen-Betriebs ausgeführte Software gebildet.

In einer bevorzugten Ausgestaltung des erfindungsgemäßen Fahrzeugs ist das Antriebsmoment der Brennkraftmaschine mittels einer in der Steuereinrichtung gespeicherten Drehmoment-Kennlinie bzw. Volllast-Kennlinie drehzahlabhängig begrenzt. Zur Verstellung des Drehmoment-Maximalwerts kann dann der Verlauf dieser Drehmoment-Kennlinie zumindest in einem definierten Drehzahlbereich mittels der Stelleinrichtung verstellt bzw. verändert werden. Auf diese Weise kann der Drehmoment-Maximalwert einfach und effektiv mittels der Stelleinrichtung verstellt werden.

Weiter bevorzugt ist eine durch einen Fahrer des Fahrzeugs betätigbare Betätigungseinrichtung, insbesondere einen Taster und/oder einen Schalter, vorgesehen, mittels der die Steuereinrichtung von einem Grundmodus in einen Energiemodus und/oder umgekehrt geschaltet werden kann, wobei in dem Grundmodus die Stelleinrichtung deaktiviert ist, und wobei in dem Energiesparmodus die Stelleinrichtung zumindest zeitweise aktiviert ist. So kann der Fahrer des Fahrzeugs die Stelleinrichtung immer dann aktivieren bzw. deaktivieren, wenn er dies wünscht.

In einer bevorzugten konkreten Ausgestaltung kann in dem Energiesparmodus ein Hoch-Drehmomentwert und wenigstens ein, insbesondere ein oder zwei, kleiner als der Hoch-Drehmomentwert ausgebildeter Niedrig-Drehmomentwert mittels der Stelleinrichtung als Drehmoment-Maximalwert eingestellt werden. So kann der Kraftstoffverbrauch des Fahrzeugs einfach und effektiv verringert werden. Der Niedrig-Drehmomentwert liegt dabei vorzugsweise in einem Bereich von 80-90% des Hoch-Drehmomentwerts. Bevorzugt ist zudem vorgesehen, dass in dem Grundmodus der Drehmoment-Maximalwert durch den Hoch-Drehmomentwert gebildet ist. In dem Grundmodus wird einem Fahrer des Fahrzeugs somit durchgehend das höhere Brennkraftmaschinen-Antriebsmoment zur Verfügung gestellt.

In einer bevorzugten konkreten Ausgestaltung wird, sofern bei aktivierter Stelleinrichtung mittels der Steuereinrichtung ermittelt wird, dass ein unmittelbar vorausliegender Fahrbahnabschnitt mit dem aktuell eingelegten Gang eines, insbesondere automatisierten, Fahrzeuggetriebes und mit dem Niedrig-Drehmomentwert als Drehmoment-Maximalwert bewältigt werden kann, mittels der Stelleinrichtung der Niedrig-Drehmomentwert als Drehmoment-Maximalwert eingestellt. Auf diese Weise wird zuverlässig sichergestellt, dass die Brennkraftmaschine bei einer geringeren Steigung der Fahrbahn in einem besonders energieeffizienten Bereich betrieben wird.

Vorteilhaft wird, sofern bei aktivierter Stelleinrichtung mittels der Steuereinrichtung ermittelt wird, dass ein unmittelbar vorausliegender Fahrbahnabschnitt nicht mit dem aktuell eingelegten Gang eines, insbesondere automatisierten, Fahrzeuggetriebes und dem Niedrig-Drehmoment als Drehmoment-Maximalwert bewältigt werden kann, mittels der Stelleinrichtung der Hoch-Drehmomentwert als Drehmoment-Maximalwert eingestellt wird. So wird mit erhöhter Wahrscheinlichkeit erreicht, dass ein steilerer Fahrbahnabschnitt ohne Zurückschalten in einen kleineren Gang des Fahrzeuggetriebes mit dem Fahrzeug bewältigt werden kann. So wird der Fahrkomfort erhöht und gleichzeitig auch der Kraftstoffverbrauch des Fahrzeugs verringert.

Weiter bevorzugt ist es, wenn die Stelleinrichtung im Energiesparmodus nur dann aktiviert wird, wenn wenigstens ein definierter Gang, insbesondere ein Gang aus der oberen Hälfte der verfügbaren Gänge, eines, insbesondere automatisierten, Fahrzeuggetriebes eingelegt ist. Dadurch wird die selbsttätige Einstellung des Drehmoment-Maximalwerts nur dann angewendet, wenn dies auch besonders vorteilhaft ist. Bei einem 12-stufigen Fahrzeuggetriebe ist die obere Hälfte der verfügbaren Gänge beispielsweise durch die Gänge 7 bis 12 gebildet.

In einer optionalen Ausgestaltung kann bei einer Umschaltung in den Energiesparmodus eine Geschwindigkeits-Regeleinrichtung des Fahrzeugs aktiviert werden, mittels der die Fahrzeuggeschwindigkeit auf einen definierten Geschwindigkeits-Sollwert, insbesondere auf die aktuelle Fahrzeuggeschwindigkeit als Geschwindigkeits-Sollwert und/oder auf einen vom Fahrer einstellbaren Geschwindigkeits-Sollwert, geregelt wird. In Verbindung mit einer derartigen Geschwindigkeits-Regeleinrichtung ist die erfindungsgemäße Einstellung des Drehmoment-Maximalwerts in Abhängigkeit von der ermittelten Fahrbahnsteigung besonders effektiv. Alternativ wäre es aber auch denkbar, dass bei einer Umschaltung in den Energiesparmodus die Geschwindigkeits-Regeleinrichtung des Fahrzeugs nicht automatisch aktiviert wird, so dass die Fahrzeuggeschwindigkeit im Energiesparmodus dann allein über das Fahrpedal eingestellt werden kann.

In einer weiteren bevorzugten Ausgestaltung ist eine Gewicht-Ermittlungseinrichtung vorgesehen, mittels der das aktuelle Gewicht bzw. der aktuelle Beladungszustand des Fahrzeugs ermittelt werden kann. Mittels der Stelleinrichtung wird der definierte Drehmoment-Maximalwert dann zusätzlich in Abhängigkeit von dem ermittelten aktuellen Fahrzeuggewicht als weiteren Einstellparameter selbsttätig bzw. automatisch eingestellt. So wird die Effektivität der Stelleinrichtung deutlich erhöht, da das Fahrzeuggewicht einen wesentlichen Parameter für die Bewältigung von Anstiegen an einer Fahrbahn darstellt. Das aktuelle Fahrzeuggewicht kann dabei beispielsweise über den gemessenen Balgdruck einer Luftfederung des Fahrzeugs und Beschleunigungsberechnungen ermittelt werden.

In einer bevorzugten konkreten Ausgestaltung weist die Steigung-Ermittlungseinrichtung eine Speichereinrichtung auf, in der Daten über die Topographie von Straßen und/oder Straßenkartendaten gespeichert sind. So kann die Steigung des aktuellen und/oder zukünftigen Fahrbahnabschnitts einfach und effektiv ermittelt werden. Weiter bevorzugt weist die Steigung-Ermittlungseinrichtung eine Standort-Ermittlungseinrichtung auf, mittels der der aktuelle Standort des Fahrzeugs ermittelt werden kann. Diese Standort-Ermittlungseinrichtung kann beispielsweise durch ein GPS-System gebildet sein.

Zur Lösung der bereits genannten Aufgabe wird ferner ein Verfahren zum Betreiben eines Fahrzeugs, insbesondere eines Nutzfahrzeugs, beansprucht, wobei das Fahrzeug eine, eine Brennkraftmaschine aufweisende Antriebseinrichtung zum Antreiben des Fahrzeugs aufweist, wobei das Fahrzeug eine Steigung-Ermittlungseinrichtung aufweist, mittels der die Fahrbahnsteigung an einem aktuell und/oder voraussichtlich zukünftig mit dem Fahrzeug befahrenden Fahrbahnabschnitt ermittelt werden kann, wobei das Fahrzeug eine Steuereinrichtung aufweist, mittels der die Brennkraftmaschine derart gesteuert werden kann, dass das maximale Antriebsmoment der Brennkraftmaschine auf einen definierten Drehmoment-Maximalwert begrenzt ist. Erfindungsgemäß weist die Steuereinrichtung eine datenübertragend mit der Steigung-Ermittlungseinrichtung verbundene Stelleinrichtung auf, mittels der, insbesondere zur Reduzierung des Kraftstoffverbrauch des Fahrzeugs, der definierte Drehmoment-Maximalwert in Abhängigkeit von der ermittelten Fahrbahnsteigung an dem aktuell und/oder zukünftig mit dem Fahrzeug befahrenen Fahrbahnabschnitt als Einstellparameter selbsttätig bzw. automatisch eingestellt wird.

Die sich durch die erfindungsgemäße Verfahrensführung ergebenden Vorteile sind identisch mit den bereits gewürdigten Vorteilen des erfindungsgemäßen Fahrzeugs, so dass diese an dieser Stelle nicht wiederholt werden.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Figur 1: ein erfindungsgemäßes Fahrzeug in einer definierten Verkehrssituation mit entsprechender Topographie;
- Figur 2: eine schematische Darstellung, aus der der Aufbau des erfindungsgemäßen Fahrzeugs hervorgeht;
- Figur 3: ein Diagramm, anhand dem die Funktionsweise einer Steuereinrichtung des Fahrzeugs erläutert wird; und
- Figur 4: ein Ablaufdiagramm, anhand dem die Funktionsweise des Fahrzeugs erläutert wird.

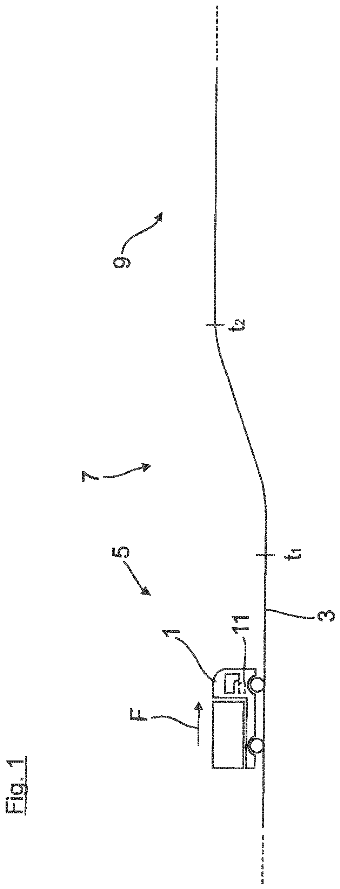

In Figur 1 ist eine Verkehrssituation gezeigt, bei der sich ein hier beispielhaft als Lastkraftwagen ausgebildetes erfindungsgemäßes Fahrzeug 1 auf einer Fahrbahn 3 befindet und in Fahrtrichtung F vorwärts fährt. Dabei fährt das Fahrzeug 1 auf einem ebenen bzw. horizontalen Bereich 5 der Fahrbahn 3. Auf diesen ebenen Fahrbahnbereich 5 folgt in Fahrtrichtung F ein Bereich 7 der Fahrbahn 3, an dem die Fahrbahn 3 relativ steil ansteigt. Nach dem Anstiegsbereich 7 folgt dann wiederum ein ebener bzw. horizontaler Bereich 9 der Fahrbahn 3.

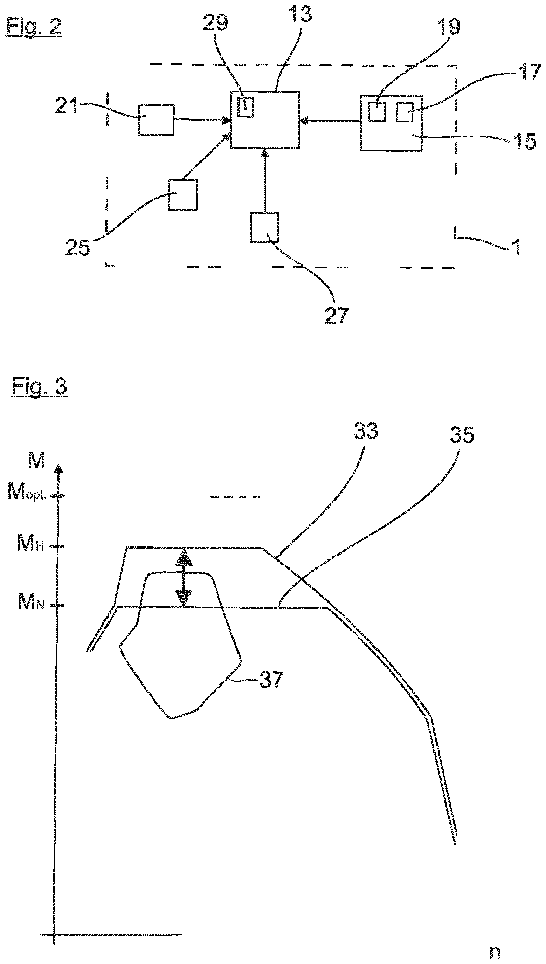

Wie aus Figur 1 weiter hervorgeht, weist das Fahrzeug 1 eine mit gestrichelten Linien angedeutete Brennkraftmaschine 11 als Antriebsmotor auf. Die Brennkraftmaschine 11 weist eine Steuereinrichtung bzw. ein Steuergerät 13 (Figur 2) auf, mittels dem der Betrieb der Brennkraftmaschine 11 gesteuert wird. Dabei wird der Betrieb der Brennkraftmaschine 11 derart gesteuert, dass das maximale Antriebsmoment der Brennkraftmaschine 11 mittels einer in dem Steuergerät 13 gespeicherten Drehmoment-Kennlinie drehzahlabhängig begrenzt ist.

Wie in Figur 2 gezeigt ist, ist das Steuergerät 13 der Brennkraftmaschine 11 datenübertragend mit einer Steigung-Ermittlungseinrichtung 15 des Fahrzeugs 1 verbunden, mittels der hier beispielhaft die Fahrbahnsteigung an einem aktuell und voraussichtlich zukünftig mit dem Lastkraftwagen 1 befahrenen Fahrbahnabschnitt ermittelt werden kann. Die Steigung-Ermittlungseinrichtung weist hier beispielhaft eine Speichereinrichtung 17 auf, in der Daten über die Topographie von Straßen sowie auch Straßenkartendaten gespeichert sind. Zudem weist die Steigung-Ermittlungseinrichtung 15 hier auch eine Standort-Ermittlungseinrichtung 19 auf, mittels der der aktuelle Standort des Fahrzeugs 1 ermittelt werden kann. Mittels der Information zu dem Standort des Fahrzeugs und den in der Speichereinrichtung 17 gespeicherten Daten kann die Steigung-Ermittlungseinrichtung 15 die aktuelle Fahrbahnsteigung, die voraussichtliche zukünftige Fahrstrecke des Fahrzeugs 1 in einem definierten folgenden Zeitraum, beispielsweise in der folgenden Minute oder in dem folgenden Kilometer, sowie auch die Fahrbahnsteigung auf der zukünftigen Fahrstrecke des Fahrzeugs 1 einfach und zuverlässig ermitteln.

Gemäß Figur 2 ist das Steuergerät 13 hier weiter auch datenübertragend mit einer Gewicht-Ermittlungseinrichtung 21 des Fahrzeugs 1 verbunden, mittels der das aktuelle Gewicht des Lastkraftwagens 1 bzw. der aktuelle Beladungszustand des Lastkraftwagens 1 ermittelt werden kann.

Weiter ist das Steuergerät 13 der Brennkraftmaschine 11 hier auch datenübertragend mit einem Steuergerät 25 eines automatisierten Fahrzeuggetriebes verbunden, so dass das Steuergerät 25 dem Steuergerät 13 immer den aktuell eingelegten Gang des Fahrzeuggetriebes übermittelt. Zudem ist in dem Steuergerät 13 die Antriebsstrang-Konfiguration des Fahrzeugs 1 gespeichert.

Wie in Figur 2 weiter gezeigt ist, weist das Fahrzeug 1 weiter auch eine durch einen Fahrer des Fahrzeugs 1 betätigbare, signaltechnisch mit dem Steuergerät 13 verbundene Betätigungseinrichtung auf, die beispielsweise durch wenigstens einen Taster oder wenigstens einen Schalter gebildet sein kann. Mittels dieser Betätigungseinrichtung 27 kann das Steuergerät 13 hier von einem Grundmodus in einen Energiesparmodus und umgekehrt geschaltet werden. In dem Grundmodus ist eine Stelleinrichtung 29 des Steuergeräts 13 dabei deaktiviert, während in dem Energiesparmodus die Stelleinrichtung 29 des Steuergeräts 13 zumindest zeitweise aktiviert ist. Konkret wird die Stelleinrichtung 29 hier im Energiesparmodus nur dann aktiviert, wenn ein Gang aus der oberen Hälfte der Gänge des automatisierten Fahrzeuggetriebes eingelegt ist.

Bei aktivierter Stelleinrichtung 29 wird mittels der Stelleinrichtung 29 der Verlauf der in dem Steuergerät 13 gespeicherten Drehmoment-Kennlinie in Abhängigkeit von der ermittelten aktuellen und voraussichtlichen zukünftigen Fahrbahnsteigung sowie auch in Abhängigkeit von dem ermittelten aktuellen Fahrzeuggewicht selbsttätig bzw. automatisch eingestellt. Konkret wird hier in Abhängigkeit von der ermittelten Fahrbahnsteigung und dem ermittelten Fahrzeuggewicht ein definierter Drehmoment-Maximalwert, auf den das maximale Antriebsmoment der Brennkraftmaschine 11 begrenzt ist, mittels der Stelleinrichtung 29 eingestellt. Dabei kann hier beispielhaft ein Hoch-Drehmomentwert M_{H} (Figur 3) und ein kleiner als der Hoch-Drehmomentwert M_{H} ausgebildeter Niedrig-Drehmomentwert M_{N} als Drehmoment-Maximalwert mittels der Stelleinrichtung 29 eingestellt werden.

Zur Verdeutlichung dieser Einstellung des Drehmoment-Maximalwerts mittels der Stelleinrichtung 29 ist in das Diagramm gemäß Fig. 3 eine erste Drehmoment-Kennlinie 33 eingetragen ist, bei der der Drehmoment-Maximalwert durch den Hoch-Drehmomentwert M_{H} gebildet ist. Zudem ist das Diagramm gemäß Figur 3 auch eine Drehmoment-Kennlinie 35 eingetragen, bei dem der Drehmoment-Maximalwert durch den Niedrig-Drehmomentwert M_{N} gebildet ist. Ansonsten ist der Verlauf der beiden Drehmoment-Kennlinien 33, 35 identisch. In das Diagramm gemäß Fig. 3 ist hier zudem auch ein Betriebsbereich 37 der Brennkraftmaschine 11 eingetragen, in dem die Brennkraftmaschine 11 besonders energieeffizient betrieben wird. Im Gegensatz zur Drehmoment-Kennlinie 33 verläuft die Drehmoment-Kennlinie 35 durch den energieeffizienten Betriebsbereich 37 der Brennkraftmaschine 11, so dass die Brennkraftmaschine 11 mittels der Drehmoment-Kennlinie 35 energieeffizienter bzw. mit geringerem Kraftstoffverbrauch als mit der Drehmoment-Kennlinie 33 betrieben werden kann.

Optional könnte zudem vorgesehen sein, dass mittels der Stelleinrichtung 29 zusätzlich auch ein in Fig. 3 mit gestrichelten Linien angedeuteter, größer als der Hoch-Drehmomentwert M_{H} ausgebildeter dritter Drehmomentwert M_{opt.} als Drehmoment-Maximalwert eingestellt werden kann.

Des Weiteren wird hier bei deaktivierter Stelleinrichtung 29 und somit auch im Grundmodus des Steuergeräts 13 stets der Hoch-Drehmomentwert M_{H} als Drehmoment-Maximalwert eingestellt. Zudem weist das Steuergerät 13 hier auch eine Geschwindigkeits-Regelfunktion auf, mittels der die Fahrzeuggeschwindigkeit einen definierten Geschwindigkeits-Sollwert geregelt werden kann. Diese Geschwindigkeitsregelung wird bei einer Umschaltung des Steuergeräts 13 in den Energiesparmodus selbsttätig aktiviert.

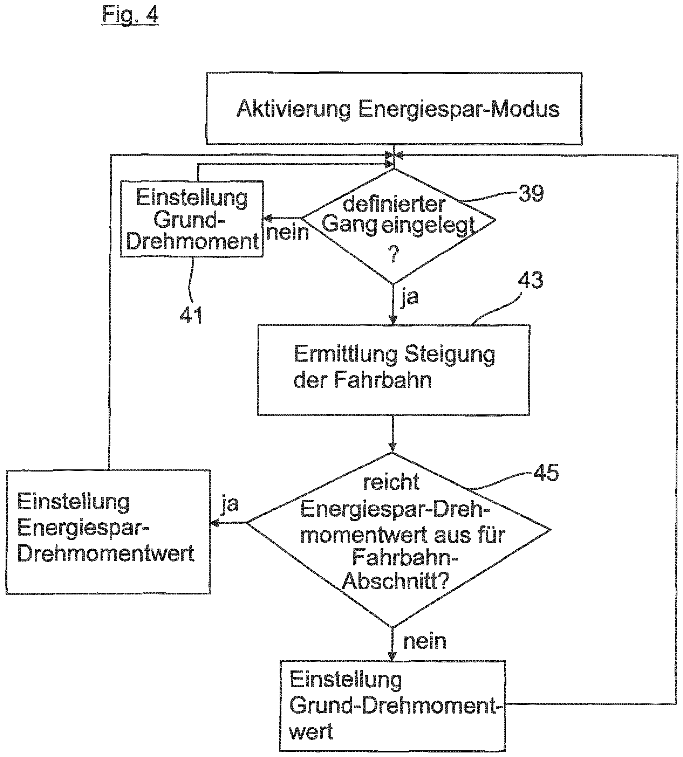

In Figur 4 ist ein Ablaufdiagramm gezeigt, anhand dem die Funktionsweise des erfindungsgemäßen Fahrzeugs 1 nochmals näher erläutert wird:
Bei einer Aktivierung des Energiesparmodus mittels der Betätigungseinrichtung 27 wird gleichzeitig die Geschwindigkeits-Regelfunktion der Steuergeräts 13 aktiviert, mittels der die Fahrzeuggeschwindigkeit dann auf die aktuelle Fahrzeuggeschwindigkeit oder auf eine vom Fahrer eingestellte Geschwindigkeit als Geschwindigkeits-Sollwert geregelt wird. Anschließend wird in einem Schritt 39 zunächst überprüft, ob der ein Gang aus der oberen Hälfte der Gänge des automatisierten Schaltgetriebes des Fahrzeugs 1 eingelegt ist. Sofern ein derartiger Gang des Schaltgetriebes nicht eingelegt ist, wird in dem Schritt 41 der Grund-Drehmomentwert als Drehmoment-Maximalwert eingestellt. Anschließend wird dann erneut überprüft, ob ein derartiger Gang des Schaltgetriebes eingelegt ist.

Wird in dem Schritt 39 ermittelt, dass ein Gang aus der oberen Hälfte der Gänge des Schaltgetriebes eingelegt ist, wird in einem Schritt 43 die aktuelle und voraussichtliche zukünftige Fahrbahnsteigung ermittelt. Anschließend wird in einem Schritt 45 überprüft, ob ein unmittelbar vor dem Fahrzeug 1 liegender Fahrbahnabschnitt mit dem aktuell eingelegten Gang des Schaltgetriebes, mit dem Niedrig-Drehmomentwert als Drehmoment-Maximalwert, mit dem aktuellen Fahrzeuggewicht und mit der aktuellen Antriebsstrangkonfiguration bewältigt werden kann. Sofern diese Abfrage bejaht wird, wird der Niedrig-Drehmomentwert als Drehmoment-Maximalwert eingestellt. Bei der in Figur 1 gezeigten Fahrsituation des Fahrzeugs 1 kann das Fahrzeug 1 die Fahrbahnbereiche 5 und 9 mit dem aktuell eingelegten höchsten Gang und mit dem Niedrig-Drehmomentwert bewältigen. Sofern die Abfrage in dem Schritt 45 verneint wird, wird der Hoch-Drehmomentwert als Drehmoment-Maximalwert eingestellt. Bei der in Figur 1 gezeigten Fahrsituation kann der relativ steile Anstiegsbereich 7 der Fahrbahn nicht mit dem aktuell eingelegten höchsten Gang und dem Niedrig-Drehmomentwert bewältigt werden.

Bis zu einem Zeitpunkt t₁ (Fig. 1), bei dem sich das Fahrzeug 1 unmittelbar vor dem Anstiegsbereich 7 befindet, wird hier dann der Niedrig-Drehmomentwert als Drehmoment-Maximalwert eingestellt. Ab dem Zeitpunkt t₁ wird der Hoch-Drehmomentwert als Drehmoment-Maximalwert eingestellt. Ab einem Zeitpunkt t₂ (Fig. 1), an dem das Fahrzeug 1 den Anstiegsbereich 7 fast bewältigt hat, wird dann wiederum der Niedrig-Drehmomentwert als Drehmoment-Maximalwert eingestellt.

### Bezugszeichenliste

- 1: Fahrzeug
- 3: Fahrbahn
- 5: Fahrbahnbereich
- 7: Fahrbahnbereich
- 9: Fahrbahnbereich
- 11: Brennkraftmaschine
- 13: Steuergerät
- 15: Steigung-Ermittlungseinrichtung
- 17: Speichereinrichtung
- 19: Standort-Ermittlungseinrichtung
- 21: Gewicht-Ermittlungseinrichtung
- 25: Steuergerät
- 27: Betätigungseinrichtung
- 29: Stelleinrichtung
- 33: Drehmoment-Kennlinie
- 35: Drehmoment-Kennlinie
- 37: Betriebsbereich
- 39: Schritt
- 41: Schritt
- 43: Schritt
- 45: Schritt
- F: Fahrtrichtung
- M_{H}: Hoch-Drehmomentwert
- M_{N}: Niedrig-Drehmomentwert
- M_{opt.}: optionaler Drehmomentwert
- t₁: erster Zeitpunkt
- t₂: zweiter Zeitpunkt

## Patentansprüche

1. Fahrzeug, insbesondere Nutzfahrzeug, mit einer, eine Brennkraftmaschine (11) aufweisenden Antriebseinrichtung zum Antreiben des Fahrzeugs (1), mit einer Steigung-Ermittlungseinrichtung (15), mittels der die Fahrbahnsteigung an einem aktuell und/oder zukünftig mit dem Fahrzeug (1) befahrenen Fahrbahnabschnitt ermittelbar ist, und mit einer Steuereinrichtung (13), mittels der die Brennkraftmaschine (11) derart steuerbar ist, dass das maximale Antriebsmoment der Brennkraftmaschine (11) auf einen definierten Drehmoment-Maximalwert (M_{H}, M_{N}) begrenzt ist, **dadurch gekennzeichnet, dass** die Steuereinrichtung (13) eine datenübertragend mit der Steigung-Ermittlungseinrichtung (15) verbundene Stelleinrichtung (29) aufweist, mittels der, insbesondere zur Reduzierung des Kraftstoffverbrauchs des Fahrzeugs, der definierte Drehmoment-Maximalwert (M_{H}, M_{N}) in Abhängigkeit von der ermittelten Fahrbahnsteigung an dem aktuell und/oder zukünftig mit dem Fahrzeug (1) befahrenen Fahrbahnabschnitt als Einstellparameter selbsttätig einstellbar ist.

2. Fahrzeug nach Anspruch 1, **dadurch gekennzeichnet, dass** das Antriebsmoment der Brennkraftmaschine (11) mittels einer in der Steuereinrichtung (13) gespeicherten Drehmoment-Kennlinie (33, 35) drehzahlabhängig begrenzt ist, und dass zur Verstellung des Drehmoment-Maximalwerts (M_{H}, M_{N}) der Verlauf dieser Drehmoment-Kennlinie (33, 35) zumindest in einem definierten Drehzahlbereich mittels der Stelleinrichtung (29) verstellbar ist.

3. Fahrzeug nach Anspruch 1 oder 2, **dadurch gekennzeichnet, dass** eine durch einen Fahrer des Fahrzeugs (1) betätigbare Betätigungseinrichtung (27), insbesondere ein Taster und/oder ein Schalter, vorgesehen ist, mittels der die Steuereinrichtung (13) von einem Grundmodus in einen Energiesparmodus und/oder umgekehrt schaltbar ist, wobei in dem Grundmodus die Stelleinrichtung (29) deaktiviert ist, und wobei in dem Energiesparmodus die Stelleinrichtung (29) zumindest zeitweise aktiviert ist.

4. Fahrzeug nach Anspruch 3, **dadurch gekennzeichnet, dass** in dem Energiesparmodus ein Hoch-Drehmomentwert (M_{H}) und wenigstens ein kleiner als der Hoch-Drehmomentwert (M_{H}) ausgebildeter Niedrig-Drehmomentwert (M_{N}) mittels der Stelleinrichtung (29) als Drehmoment-Maximalwert einstellbar ist, wobei bevorzugt vorgesehen ist, dass in dem Grundmodus der Drehmoment-Maximalwert durch den Hoch-Drehmomentwert (M_{H}) gebildet ist.

5. Fahrzeug nach Anspruch 4, **dadurch gekennzeichnet, dass**, sofern bei aktivierter Stelleinrichtung (29) mittels der Steuereinrichtung (13) ermittelt wird, dass ein unmittelbar vorausliegender Fahrbahnabschnitt (9) mit dem aktuell eingelegten Gang eines, insbesondere automatisierten, Fahrzeuggetriebes (25) und dem Niedrig-Drehmomentwert (M_{N}) als Drehmoment-Maximalwert bewältigt werden kann, mittels der Stelleinrichtung (29) der Niedrig-Drehmomentwert (M_{N}) als Drehmoment-Maximalwert eingestellt wird.

6. Fahrzeug nach Anspruch 4 oder 5, **dadurch gekennzeichnet, dass**, sofern bei aktivierter Stelleinrichtung (29) mittels der Steuereinrichtung (13) ermittelt wird, dass ein unmittelbar vorausliegender Fahrbahnabschnitt (7) nicht mit dem aktuell eingelegten Gang eines, insbesondere automatisierten, Fahrzeuggetriebes (25) und dem Niedrig-Drehmomentwert (M_{N}) als Drehmoment-Maximalwert bewältigt werden kann, mittels der Stelleinrichtung (29) der Hoch-Drehmomentwert (M_{H}) als Drehmoment-Maximalwert eingestellt wird.

7. Fahrzeug nach einem der Ansprüche 3 bis 6, **dadurch gekennzeichnet, dass** die Stelleinrichtung (29) im Energiesparmodus nur dann aktiviert wird, wenn wenigstens ein definierter Gang, insbesondere ein Gang aus der oberen Hälfte der verfügbaren Gänge, eines, insbesondere automatisierten, Fahrzeuggetriebes (25) eingelegt ist.

8. Fahrzeug nach einem der Ansprüche 3 bis 7, **dadurch gekennzeichnet, dass** bei einer Umschaltung in den Energiesparmodus eine Geschwindigkeits-Regeleinrichtung (13) des Fahrzeugs (1) aktiviert wird, mit dem die Fahrzeuggeschwindigkeit auf einen definierten Geschwindigkeits-Sollwert, insbesondere auf die aktuelle Fahrzeuggeschwindigkeit als Geschwindigkeits-Sollwert, geregelt wird.

9. Fahrzeug nach einem der vorhergehenden Ansprüche, **dadurch gekennzeichnet, dass** eine Gewicht-Ermittlungseinrichtung (21) vorgesehen ist, mittels der das aktuelle Gewicht des Fahrzeugs (1) ermittelbar ist, und dass mittels der Stelleinrichtung (29) der definierte Drehmoment-Maximalwert (M_{H}, M_{N}) in Abhängigkeit von dem ermittelten aktuellen Fahrzeuggewicht als weiteren Einstellparameter selbsttätig einstellbar ist.

10. Fahrzeug nach einem der vorhergehenden Ansprüche, **dadurch gekennzeichnet, dass** die Steigung-Ermittlungseinrichtung (15) eine Speichereinrichtung (17) aufweist, in der Daten über die Topographie von Straßen und/oder Straßenkartendaten gespeichert sind, und/oder dass die Steigung-Ermittlungseinrichtung (15) ein Standort-Ermittlungseinrichtung (19) aufweist, mittels dem der aktuelle Standort des Fahrzeugs (1) ermittelbar ist.

11. Verfahren zum Betreiben eines Fahrzeugs, insbesondere eines Nutzfahrzeugs und/oder eines Fahrzeugs nach einem der vorhergehenden Ansprüche, wobei das Fahrzeug eine, eine Brennkraftmaschine (11) aufweisende Antriebseinrichtung zum Antreiben des Fahrzeugs (1) aufweist, wobei das Fahrzeug eine Steigung-Ermittlungseinrichtung (15) aufweist, mittels der die Fahrbahnsteigung an einem aktuell und/oder zukünftig mit dem Fahrzeug (1) befahrenen Fahrbahnabschnitt ermittelbar ist, wobei das Fahrzeug eine Steuereinrichtung (13) aufweist, mittels der die Brennkraftmaschine (11) derart steuerbar ist, dass das maximale Antriebsmoment der Brennkraftmaschine (11) auf einen definierten Drehmoment-Maximalwert (M_{H}, M_{N}) begrenzt ist, **dadurch gekennzeichnet, dass** die Steuereinrichtung (13) eine datenübertragend mit der Steigung-Ermittlungseinrichtung (15) verbundene Stelleinrichtung (29) aufweist, mittels der, insbesondere zur Reduzierung des Kraftstoffverbrauchs des Fahrzeugs (1), der definierte Drehmoment-Maximalwert (M_{H}, M_{N}) in Abhängigkeit von der ermittelten Fahrbahnsteigung an dem aktuell und/oder zukünftig mit dem Fahrzeug (1) befahrenen Fahrbahnabschnitt als Einstellparameter selbsttätig eingestellt wird.

## Claims

1. Vehicle, in particular a utility vehicle, with a drive device, having an internal combustion engine (11), for driving the vehicle (1), with a gradient-detection device (15) by means of which the gradient of the carriageway on a section of the carriageway which is currently being travelled on and/or will be travelled on in the future with the vehicle (1) can be detected, and with a control device (13) by means of which the internal combustion engine (11) can be controlled in such a way that the maximum drive torque of the internal combustion engine (11) is limited to a defined torque maximum value (M_{H}, M_{N}), **characterized in that** the control device (13) has an actuator device (29) which is connected in a data-transmitting fashion to the gradient-detection device (15) and by means of which, in particular in order to reduce the fuel consumption of the vehicle, the defined torque maximum value (M_{H}, M_{N}) can be set automatically as a setting parameter as a function of the detected gradient of the carriageway at the section of carriageway which is currently being travelled on and/or will be travelled on in the future with the vehicle (1).

2. Vehicle according to Claim 1, **characterized in that** the drive torque of the internal combustion engine (11) is limited as a function of the rotational speed by means of a torque characteristic curve (33, 35) which is stored in the control device (13), and **in that**, in order to adjust the torque maximum value (M_{H}, M_{N}), the profile of this torque characteristic curve (33, 35) can be adjusted at least in a defined rotational speed range by means of the actuator device (29) .

3. Vehicle according to Claim 1 or 2, **characterized in that** an activation device (27), in particular a pushbutton key and/or a switch, which can be activated by a driver of the vehicle (1) is provided, by means of which activation device (27) the control device (13) can be switched from a basic mode into an energy saving mode and/or vice versa, wherein in the basic mode the actuator device (29) is deactivated, and wherein in the energy saving mode the actuator device (29) is at least temporarily activated.

4. Vehicle according to Claim 3, **characterized in that** in the energy saving mode a high torque value (M_{H}) and at least one low torque value (M_{N}), which is embodied so as to be smaller than the high torque value (M_{H}), can be set as a torque maximum value by means of the actuator device (29), wherein there is preferably provision that in the basic mode the torque maximum value is formed by the high torque value (M_{H}).

5. Vehicle according to Claim 4, **characterized in that** if, when the actuator device (29) is activated, it is detected by means of the control device (13) that a section (9) of carriageway lying directly ahead can be coped with using the currently engaged gear speed of an, in particular automated, vehicle transmission (25) and the low torque value (M_{N}) as a torque maximum value, the low torque value (M_{N}) is set as a torque maximum value by means of the actuator device (29).

6. Vehicle according to Claim 4 or 5, **characterized in that** if, when the actuator device (29) is activated, it is detected by means of the control device (13) that a section (7) of carriageway which lies directly ahead cannot be coped with using the currently engaged gear speed of an, in particular automated, vehicle transmission (25) and the low torque value (M_{N}) as a torque maximum value, the high torque value (M_{H}) is set as a torque maximum value by means of the actuator device (29).

7. Vehicle according to one of Claims 3 to 6, **characterized in that** the actuator device (29) is activated in the energy saving mode only if at least one defined gear speed, in particular a gear speed from the upper half of the available gear speeds, of an, in particular automated, vehicle transmission (25) is engaged.

8. Vehicle according to one of Claims 3 to 7, **characterized in that** when switching over into the energy saving mode occurs, a speed control device (13) of the vehicle (1) is activated, with which the vehicle speed is adjusted to a defined speed setpoint value, in particular to the current vehicle speed as a speed setpoint value.

9. Vehicle according to one of the preceding claims, **characterized in that** a weight-detection device (21) is provided, by means of which the current weight of the vehicle (1) can be detected, and **in that** the defined torque maximum value (M_{H}, M_{N}) can be set automatically by means of the actuator device (29) as a function of the detected current vehicle weight as a further setting parameter.

10. Vehicle according to one of the preceding claims, **characterized in that** the gradient-detection device (15) has a memory device (17) in which data relating to the topography of roads and/or road map data are stored, and/or **in that** the gradient-detection device (15) has a location-detection device (19), by means of which the current location of the vehicle (1) can be detected.

11. Method for operating a vehicle, in particular a utility vehicle and/or a vehicle according to one of the preceding claims, wherein the vehicle has a drive device, having an internal combustion engine (11) for driving the vehicle (1), wherein the vehicle has a gradient-detection device (15) by means of which the gradient of the carriageway can be detected at a section of carriageway which is currently being travelled on and/or will be travelled on in future with the vehicle (1), wherein the vehicle has a control device (13) by means of which the internal combustion engine (11) can be controlled in such a way that the maximum drive torque of the internal combustion engine (11) is limited to a defined torque maximum value (M_{H}, M_{N}), **characterized in that** the control device (13) has an actuator device (29) which is connected in a data-transmitting fashion to the gradient-detection device (15) and by means of which, in particular in order to reduce the fuel consumption of the vehicle (1), the defined torque maximum value (M_{H}, M_{N}) is set automatically as a setting parameter as a function of the detected carriageway gradient at the section of the carriageway which is currently being travelled on and/or will be travelled on in future with the vehicle (1).

## Revendications

1. Véhicule, notamment véhicule utilitaire, comprenant un dispositif propulseur qui possède un moteur à combustion interne (11) destiné à propulser le véhicule (1), comprenant un dispositif de détermination de pente (15) au moyen duquel peut être déterminée la pente de chaussée au niveau d'une portion de chaussée sur laquelle circule actuellement et/ou circulera à l'avenir le véhicule (1), et comprenant un dispositif de commande (13) au moyen duquel le moteur à combustion interne (11) peut être commandé de telle sorte que le couple d'entraînement maximal du moteur à combustion interne (11) est limité à une valeur maximale de couple (M_{H}, M_{N}) définie, **caractérisé en ce que** le dispositif de commande (13) possède un dispositif de réglage (29) relié avec transmission de données au dispositif de détermination de pente (15), au moyen duquel la valeur maximale de couple (M_{H}, M_{N}) définie peut être réglée automatiquement en tant que paramètre de réglage en fonction de la pente de chaussée déterminée au niveau de la portion de chaussée sur laquelle circule actuellement et/ou circulera à l'avenir le véhicule (1), notamment en vue de réduire la consommation de carburant du véhicule.

2. Véhicule selon la revendication 1, **caractérisé en ce que** le couple d'entraînement du moteur à combustion interne (11) est limité en fonction de la vitesse de rotation au moyen d'une courbe caractéristique de couple (33, 35) mémorisée dans le dispositif de commande (13), et **en ce que** pour ajuster la valeur maximale de couple (M_{H}, M_{N}), le tracé de cette courbe caractéristique de couple (33, 35) peut être ajustée au moyen du dispositif de réglage (29) au moins dans une plage de valeurs de rotation définie.

3. Véhicule selon la revendication 1 ou 2, **caractérisé en ce qu'**un dispositif d'actionnement (27) qui peut être actionné par un conducteur du véhicule (1), notamment un poussoir et/ou un commutateur, est présent, au moyen duquel le dispositif de commande (13) peut être commuté d'un mode de base en un mode d'économie d'énergie et/ou inversement, le dispositif de réglage (29) étant désactivé dans le mode de base et le dispositif de réglage (29) étant au moins partiellement activé dans le mode d'économie d'énergie.

4. Véhicule selon la revendication 3, **caractérisé en ce que** dans le mode d'économie d'énergie, une valeur de couple élevée (M_{H}) et au moins une valeur de couple faible (M_{N}), formée inférieure à la valeur de couple élevée (M_{H}), peuvent être réglées en tant que valeur maximale de couple au moyen du dispositif de réglage (29), en prévoyant de préférence que dans le mode de base, la valeur maximale de couple est formée par la valeur de couple élevée (M_{H}).

5. Véhicule selon la revendication 4, **caractérisé en ce que** dans la mesure où le dispositif de commande (13) amène à déterminer, alors que le dispositif de réglage (29) est activé, qu'une portion de chaussée (9) se trouvant directement à l'avant peut être maîtrisée avec le rapport actuellement engagé d'une boîte de vitesses de véhicule (25), notamment automatisée, et la valeur de couple faible (M_{N}) en tant que valeur maximale de couple, la valeur de couple faible (M_{N}) est réglée en tant que valeur maximale de couple avec le dispositif de réglage (29).

6. Véhicule selon la revendication 4 ou 5, **caractérisé en ce que** dans la mesure où le dispositif de commande (13) amène à déterminer, alors que le dispositif de réglage (29) est activé, qu'une portion de chaussée (7) se trouvant directement à l'avant ne peut pas être maîtrisée avec le rapport actuellement engagé d'une boîte de vitesses de véhicule (25), notamment automatisée, et la valeur de couple faible (M_{N}) en tant que valeur maximale de couple, la valeur de couple élevée (M_{H}) est réglée en tant que valeur maximale de couple avec le dispositif de réglage (29).

7. Véhicule selon l'une des revendications 3 à 6, **caractérisé en ce qu'**en mode d'économie d'énergie, le dispositif de réglage (29) n'est activé que lorsqu'au moins un rapport défini, notamment un rapport de la moitié supérieure des rapports disponibles d'une boîte de vitesses de véhicule (25), notamment automatisée, est engagé.

8. Véhicule selon l'une des revendications 3 à 7, **caractérisé en ce que** lors d'une permutation dans le mode d'économie d'énergie, un dispositif de réduction de vitesse (13) du véhicule (1) est activé, avec lequel la vitesse du véhicule est régulée à une vitesse de consigne définie, notamment à la vitesse actuelle du véhicule en tant que vitesse de consigne.

9. Véhicule selon l'une des revendications précédentes, **caractérisé en ce qu'**un dispositif de détermination du poids (21) est présent, au moyen duquel le poids actuel du véhicule (1) peut être déterminé, et **en ce que** la valeur maximale de couple (M_{H}, M_{N}) définie peut être réglée automatiquement au moyen du dispositif de réglage (29) en tant que paramètre de réglage supplémentaire en fonction du poids actuel déterminé du véhicule.

10. Véhicule selon l'une des revendications précédentes, **caractérisé en ce que** le dispositif de détermination de pente (15) possède un dispositif à mémoire (17) dans lequel sont mémorisées des données à propos de la topographie des routes et/ des données de carte routière, et/ou **en ce que** le dispositif de détermination de pente (15) possède un dispositif de détermination d'emplacement (19) au moyen duquel peut être déterminé l'emplacement actuel du véhicule (1).

11. Procédé pour faire fonctionner un véhicule, notamment un véhicule utilitaire et/ou un véhicule selon l'une des revendications précédentes, le véhicule comprenant un dispositif propulseur qui possède un moteur à combustion interne (11) destiné à propulser le véhicule (1), le véhicule comprenant un dispositif de détermination de pente (15) au moyen duquel peut être déterminée la pente de chaussée au niveau d'une portion de chaussée sur laquelle circule actuellement et/ou circulera à l'avenir le véhicule (1), le véhicule comprenant un dispositif de commande (13) au moyen duquel le moteur à combustion interne (11) peut être commandé de telle sorte que le couple d'entraînement maximal du moteur à combustion interne (11) est limité à une valeur maximale de couple (M_{H}, M_{N}) définie, **caractérisé en ce que** le dispositif de commande (13) possède un dispositif de réglage (29) relié avec transmission de données au dispositif de détermination de pente (15), au moyen duquel la valeur maximale de couple (M_{H}, M_{N}) définie peut être réglée automatiquement en tant que paramètre de réglage en fonction de la pente de chaussée déterminée au niveau de la portion de chaussée sur laquelle circule actuellement et/ou circulera à l'avenir le véhicule (1), notamment en vue de réduire la consommation de carburant du véhicule.
